# EUROPEAN PATENT SPECIFICATION

(11) **EP 2 960 968 B1**
(45) Date of publication and mention of the grant of the patent: **20.12.2017**
(21) Application number: 14753859.9
(22) Date of filing: 19.02.2014
(51) Int. Cl.: H01M 4/139, H01M 4/13, H01M 4/62, H01M 10/052, H01M 10/0566, H01M 4/131, H01M 4/136, H01M 4/1391, H01M 4/1397, H01M 4/505, H01M 4/525, H01M 4/58

(54) **SLURRY COMPOSITION FOR POSITIVE ELECTRODES OF LITHIUM ION SECONDARY BATTERIES, METHOD FOR PRODUCING POSITIVE ELECTRODE FOR LITHIUM ION SECONDARY BATTERIES, POSITIVE ELECTRODE FOR LITHIUM ION SECONDARY BATTERIES, AND LITHIUM ION SECONDARY BATTERY**
AUFSCHLÄMMUNGSZUSAMMENSETZUNG FÜR POSITIVELEKTRODEN FÜR LITHIUM-IONEN-SEKUNDÄRBATTERIEN, VERFAHREN ZUR HERSTELLUNG EINER POSITIVELEKTRODE FÜR LITHIUM-IONEN-SEKUNDÄRBATTERIEN, POSITIVELEKTRODE FÜR LITHIUM-IONEN-SEKUNDÄRBATTERIEN UND LITHIUM-IONEN-SEKUNDÄRBATTERIE
COMPOSITION DE BOUILLIE POUR ÉLECTRODES POSITIVES DE BATTERIES SECONDAIRES AU LITHIUM-ION, PROCÉDÉ DE FABRICATION D'ÉLECTRODE POSITIVE POUR BATTERIES SECONDAIRES AU LITHIUM-ION, ÉLECTRODE POSITIVE POUR BATTERIES SECONDAIRES AU LITHIUM-ION, ET BATTERIE SECONDAIRE AU LITHIUM-ION

(30) Priority: 19.02.2013 JP 2013030358
(43) Date of publication of application: 30.12.2015
(73) Proprietor: Zeon Corporation, Tokyo 100-8246 (JP)
(72) Inventor: MARUHASHI, Yutaka, Tokyo 100-8246 (JP)
(74) Representative: Maiwald Patentanwalts GmbH
(86) International application number: PCT/JP2014/000859
(87) International publication number: WO 2014/129188

(56) References cited:
- JP-A- H05 315 008
- JP-A- 2011 243 464
- JP-A- 2012 221 685
- JP-B2- 4 461 659
- US-A1- 2006 257 738
- US-A1- 2009 311 598

## Description

### TECHNICAL FIELD

The disclosure relates to a slurry composition for the positive electrode of a lithium ion secondary battery, a method of producing the positive electrode for a lithium ion secondary battery, the positive electrode for a lithium ion secondary battery, and a lithium ion secondary battery.

### BACKGROUND

Lithium ion secondary batteries, which have characteristics such as compact size, light weight, high energy-density, and rechargeable, are used in a wide variety of applications.

An electrode of a lithium ion secondary battery generally includes a current collector and an electrode active material layer formed on the current collector. The electrode active material layer, often referred to as an electrode mixed material layer, is formed by applying a slurry composition onto the current collector, and drying the slurry composition applied on the current collector. The slurry composition is obtained by dispersing for example an electrode active material, a conductive material, and a binder into a dispersion medium.

An example of the binder conventionally blended in the slurry composition is latex which is obtained by emulsion polymerizing monomers in the presence of a surfactant (hereinafter often referred to as "particulate binder"). An example of the surfactant used to prepare the latex is a polyoxyethylenic surfactant (see for example Patent Literature 1 (PTL 1)).

In producing a positive electrode for a lithium ion secondary battery, an aqueous slurry composition, which uses an aqueous medium as its dispersion medium, is now attracting attention to reduce environmental burdens or the like. Such an aqueous slurry composition recently proposed for the positive electrode of a lithium ion secondary batteries contains a positive electrode active material, a conductive material, a binder (particulate binder), and a viscosity modifier. This slurry composition can be found in Patent Literature 2 (PTL 2) that more specifically discloses an anode active material slurry comprising a carbon-based anode active material capable of lithium ion intercalation/deintercalation, a conductive agent, a binder having a styrene-butadiene-based polymer resin, a thickener having a cellulose-based or an acrylate-based resin, a dispersant having a polymer backbone capable of surface-adsorption and a side-chain having non-ionic surfactant properties and water.

### CITATION LIST

### Patent Literature

PTL 1: JPH10-195310A
PTL 2: US2006257738

### SUMMARY

### PROBLEM TO BE SOLVED

However, unlike the slurry composition that uses an organic medium as its dispersion medium, the aqueous slurry composition using the aforementioned conventional particulate binder, which is obtained with the use of the polyoxyethylenic surfactant, are likely to form persistent bubbles when being prepared. Thus, the positive electrode formed with such an aqueous slurry composition would have numerous defects (or pin holes) caused by the bubbles in the slurry composition in the positive electrode active material layer. This results in a failure to produce a desired positive electrode and thus fails to provide a lithium ion secondary battery that has good electrical characteristics (e.g., output characteristics).

To address the aforementioned pin-hole generation problem, a surfactant other than the polyoxyethylenic surfactant may be used, which may assist elimination of the bubbles generated upon the preparation of the slurry composition.

However, extensive studies by the inventor have revealed that the aqueous slurry composition not containing a polyoxyethylenic surfactant would cause bulging of the edge portion in the width direction of the positive electrode active material layer (i.e., the edge portion in a direction perpendicular to the direction in which the slurry composition is applied onto the current collector, which is hereinafter simply referred to as an "edge portion") due to the volume contraction when being applied and dried on the current collector to form a positive electrode active material layer in the production of the positive electrode. This makes it difficult to produce a desired positive electrode. The bulging along the edge portion of the positive electrode active material layer would be particularly significant when a viscosity modifier that causes relatively high volume contraction in the drying process is used or when the aqueous slurry composition is applied onto the current collector at high speed.

It would therefore be helpful to provide an aqueous slurry composition for the positive electrode of a lithium ion secondary battery that achieves suppression of both the generation of pin holes and the occurrence of bulging along the edge portion of a positive electrode active material layer. It would also be helpful to provide a method of producing the positive electrode for a lithium ion secondary battery obtained with the aqueous slurry composition.

It would further be helpful to provide a positive electrode for a lithium ion secondary battery that achieves suppression of both the generation of pin holes and the occurrence of bulging along the edge portion of a positive electrode active material layer. It would still further be helpful to provide a lithium ion secondary battery that includes the positive electrode for a lithium ion secondary battery and have good electrical characteristics.

### PROBLEM SOLUTION

The inventor has made extensive studies to solve the aforementioned problems. The inventor has found that use of a surfactant containing a polyoxyethylenic surfactant as well as a sulfosuccinic acid ester or its salt in an aqueous slurry composition for the positive electrode of a lithium ion secondary battery suppresses both the generation of pin holes and the occurrence of bulging along the edge portion of a positive electrode active material layer in forming the positive electrode, and have made the products and method to be disclosed herein.

The slurry composition for the positive electrode of a lithium ion secondary battery of the disclosure, which advantageously solves the aforementioned problems, contains a positive electrode active material, a conductive material, a viscosity modifier, a particulate binder, a surfactant, and water. The surfactant contains a polyoxyethylenic surfactant (a) and a sulfosuccinic acid ester or a salt thereof (b). The use of the aqueous slurry composition containing the polyoxyethylenic surfactant (a) as well as the sulfosuccinic acid ester or the salt thereof (b) achieves suppression of both the generation of pin holes and the occurrence of bulging along the edge portion of the positive electrode active material layer in forming the positive electrode.

The polyoxyethylenic surfactant (a) contained in the slurry composition for the positive electrode of a lithium ion secondary battery is preferably polyoxyethylene sulfate salt. When polyoxyethylene sulfate salt is used, the occurrence of bulging along the edge portion of the positive electrode active material layer can be suppressed with a small blending amount of the polyoxyethylenic surfactant. Thus, the degradation in electric characteristics of the lithium ion secondary battery that includes the positive electrode formed with the slurry composition can be suppressed.

In the slurry composition for the positive electrode of a lithium ion secondary battery, the preferred content of the polyoxyethylenic surfactant (a) is 1.5 parts by mass or less per 100 parts by mass of the particulate binder. When the content of the polyoxyethylenic surfactant (a) is 1.5 parts by mass or less per 100 parts by mass of the particulate binder, generation of pin holes can be suppressed, and thus degradation in electric characteristics of the lithium ion secondary battery that includes the positive electrode formed with the slurry composition can be sufficiently suppressed.

In the slurry composition for the positive electrode of a lithium ion secondary battery, the preferred content of the sulfosuccinic acid ester or the salt thereof (b) is 5.0 parts by mass or less per 100 parts by mass of the particulate binder. When the content of the sulfosuccinic acid ester or the salt thereof is 5.0 parts by mass or less per 100 parts by mass of the particulate binder, degradation in electric characteristics of the lithium ion secondary battery that includes the positive electrode formed with the slurry composition can be sufficiently suppressed.

In the slurry composition for the positive electrode of a lithium ion secondary battery, the preferred total content of the polyoxyethylenic surfactant (a) and the sulfosuccinic acid ester or the salt thereof (b) is 5.0 parts by mass or less per 100 parts by mass of the particulate binder. When the total content of the polyoxyethylenic surfactant (a) and the sulfosuccinic acid ester or the salt thereof (b) is 5.0 parts by mass or less per 100 parts by mass of the particulate binder, degradation in electric characteristics of the lithium ion secondary battery that includes the positive electrode formed with the slurry composition can be sufficiently suppressed.

In the slurry composition for the positive electrode of a lithium ion secondary battery, the preferred ratio of the content of the sulfosuccinic acid ester or the salt thereof (b) to the content of the polyoxyethylenic surfactant (a) (i.e., (b)/(a)) ranges from 1.5 to 5.0 in a mass ratio. When the mass ratio (b)/(a) ranges from 1.5 to 5.0, generation of pin holes and occurrence of bulging along the edge portion of the positive electrode active material layer can be suppressed, and thus degradation in electric characteristics of the lithium ion secondary battery that includes the positive electrode formed with the slurry composition can be sufficiently suppressed.

A method of producing the positive electrode for a lithium ion secondary battery, which advantageously solves the aforementioned problems, includes applying any one of the aforementioned slurry compositions for the positive electrode of a lithium ion secondary battery onto a current collector; and drying the slurry composition for the positive electrode of a lithium ion secondary battery applied onto the current collector to form a positive electrode active material layer on the current collector. Forming the positive electrode active material layer with the aforementioned slurry composition for the positive electrode of a lithium ion secondary battery allows production of a positive electrode for a lithium ion secondary battery that achieves suppression of both the generation of pin holes and the occurrence of bulging along the edge portion of the positive electrode active material layer.

The positive electrode for a lithium ion secondary battery, which advantageously solves the aforementioned problems, includes a positive electrode active material, a conductive material, a viscosity modifier, a particulate binder, and a surfactant. The surfactant contains a polyoxyethylenic surfactant (a) and a sulfosuccinic acid ester or a salt thereof (b). Such a positive electrode containing both the polyoxyethylenic surfactant (a) and the sulfosuccinic acid ester or the salt thereof (b) achieves suppression of both the generation of pin holes and the occurrence of bulging along the edge portion of the positive electrode active material layer. The use of the positive electrode for a lithium ion secondary battery described herein accordingly provides a lithium ion secondary battery having good electric characteristics.

The lithium ion secondary battery, which advantageously solves the aforementioned problems, includes the aforementioned positive electrode for a lithium ion secondary battery, a negative electrode, an electrolytic solution, and a separator. Accordingly, the lithium ion secondary battery that includes the aforementioned positive electrode for a lithium ion secondary battery has good electric characteristics.

### ADVANTAGEOUS EFFECT

According to the disclosure, there is provided an aqueous slurry composition for the positive electrode of a lithium ion secondary battery that achieves suppression of both the generation of pin holes and the occurrence of bulging along the edge portion of the positive electrode active material layer. Also provided according to the disclosure is a method of producing a positive electrode for a lithium ion secondary battery formed with the aforementioned aqueous slurry composition.

Further according to the disclosure, there is provided a positive electrode for a lithium ion secondary battery that achieves suppression of both the generation of pin holes and the occurrence of bulging along the edge portion of the positive electrode active material layer. Also provided according to the disclosure is a lithium ion secondary battery including the aforementioned positive electrode for a lithium ion secondary battery and having good electric characteristics.

### DETAILED DESCRIPTION

In the following, embodiments of the disclosure will be described in detail.

The slurry composition for the positive electrode of a lithium ion secondary battery according the disclosure is used to form the positive electrode of a lithium ion secondary battery. The method of producing the positive electrode of a lithium ion secondary battery of the disclosure may be used to produce the positive electrode for a lithium ion secondary battery from the slurry composition for the positive electrode of a lithium ion secondary battery, after preparing the slurry composition.

The positive electrode for a lithium ion secondary battery of the disclosure may be produced by the method of producing the positive electrode of a lithium ion secondary battery. The lithium ion secondary battery of the disclosure includes the positive electrode for a lithium ion secondary battery of the disclosure.

### (Slurry Composition for Positive Electrode of Lithium Ion Secondary Battery)

The slurry composition for the positive electrode of a lithium ion secondary battery of the disclosure is an aqueous slurry composition that uses an aqueous medium as its dispersion medium. The aqueous slurry composition contains a positive electrode active material, a conductive material, a viscosity modifier, a particulate binder, a surfactant, and water. The slurry composition for the positive electrode of a lithium ion secondary battery uses combination of a polyoxyethylenic surfactant (a) and a sulfosuccinic acid ester or its salt (b) as the surfactant.

### <Positive Electrode Active Material>

The positive electrode active material blended in the slurry composition may be, but not limited to, any positive electrode active material known in the art. Specific examples of the positive electrode active material include transition metal-containing compounds, such as a transition metal oxide, a transition metal sulfide, and a composite metal oxide comprising lithium and a transition metal. Examples of the transition metal include Ti, V, Cr, Mn, Fe, Co, Ni, Cu, and Mo.

Examples of the transition metal oxide include MnO, MnO₂, V₂O₅, V₆O₁₃, TiO₂, Cu₂V₂O₃, amorphous V₂O-P₂O₅, amorphous MoO₃, amorphous V₂O₅, and amorphous V₆O₁₃.

Examples of the transition metal sulfide include TiS₂, TiS₃, amorphous MoS₂, and FeS.

Examples of the composite metal oxide comprising lithium and a transition metal include a lithium-containing composite metal oxide with a layered structure, a lithium-containing composite metal oxide with a spinel structure, and a lithium-containing composite metal oxide with an olivine structure.

Examples of the lithium-containing composite metal oxide with a layered structure include lithium-containing cobalt oxide (LiCoO₂), lithium-containing nickel oxide (LiNiO₂), lithium-containing composite oxide of Co-Ni-Mn, lithium-containing composite oxide of Ni-Mn-Al, lithium-containing composite oxide of Ni-Co-Al, and a solid solution comprising LiMaO₂ and Li₂MbO₃. Examples of the solid solution comprising LiMaO₂ and Li₂MbO₃ include xLiMaO₂ ·(1-x)Li₂MbO₃ and the like, where x represents a number satisfying 0 < x < 1, Ma represents one or more kinds of transition metals with an average oxidation state of 3+, and Mb represents one or more kinds of transition metals with an average oxidation state of 4+.

The term "average oxidation state" as used herein refers to an average oxidation state of the "one or more kinds of transition metals" and is calculated from the molar quantity and the valence of the transition metal. For example, when the "one or more kinds of transition metals" is composed of 50 mol% Ni²⁺ and 50 mol% Mn⁴⁺, the average oxidation state of the "one or more kinds of transition metals" is calculated as (0.5) × (2+) + (0.5) × (4+) = 3+.

Examples of the lithium-containing composite metal oxide with a spinel structure include lithium manganate (LiMn₂O₄) and compounds obtained by substituting part of Mn contained in lithium manganate (LiMn₂O₄) with another transition metal. One specific example thereof is Liₛ[Mn₂₋ₜMcₜ]O₄, where Mc represents one or more kinds of transition metals having an average oxidation state of 4+, which may be Ni, Co, Fe, Cu, or Cr; t represents a number satisfying 0 < t < 1; and s represents a number satisfying 0 ≤ s ≤ 1. Another example of the positive electrode active material is lithium-rich spinel compounds represented by the formula Li₁₊ₓMn₂₋ₓO₄ (0 < X < 2).

Examples of the lithium-containing composite metal oxide with an olivine structure include olivine type lithium phosphate compounds represented by the formula Li_{y}MdPO₄, such as olivine type iron lithium phosphate (LiFePO₄) and olive type manganese lithium phosphate (LiMnPO₄), where Md represents one or more kinds of transition metals having an average oxidation state of 3+, which may be Mn, Fe, or Co, and y represents a number satisfying 0 ≤ y ≤ 2. Md of the olivine type lithium phosphate compounds represented by the formula Li_{y}MdPO₄ may be partly substituted with another metal. Examples of the metal possibly substituting the part of Md include Cu, Mg, Zn, V, Ca, Sr, Ba, Ti, Al, Si, B, and Mo.

Of the above-described positive electrode active materials, lithium-containing cobalt oxide (LiCoO₂) or olivine type iron lithium phosphate (LiFePO₄) is preferred to improve the cycle characteristic and initial capacity of the lithium ion secondary battery including the positive electrode formed with the slurry composition.

On the other hand, to increase the capacity of the lithium ion secondary battery that includes the positive electrode formed with the slurry composition, a positive electrode active material containing at least one of Mn and Ni is preferred. Specifically, to increase the capacity of the lithium ion secondary battery, the positive electrode active material may preferably be LiNiO₂, LiMn₂O₄, lithium-rich spinel compounds, LiMnPO₄, Li[Ni_{0.5}Co_{0.2}Mn_{0.3}]O₂, Li[Ni_{1/3}CO_{1/3}Mn_{1/3}]O₂, Li[Ni_{0.17}Li_{0.2}Co_{0.07}Mn_{0.56}]O₂, LiNi_{0.5}Mn_{1.5}O₄, or the like; more preferably be LiNiO₂, lithium-rich spinel compounds, Li[Ni_{0.5}Co_{0.2}Mn_{0.3}]O₂, Li[Ni_{1/3}Co_{1/3}Mn_{1/3}]O₂, Li[Ni_{0.17}Li_{0.2}Co_{0.07}Mn_{0.56}]O₂, or the like; and particularly preferably be Li[Ni_{0.5}Co_{0.2}Mn_{0.3}]O₂.

The positive electrode active material containing at least one of Mn and Ni may be coated with a coating material containing a coating resin that is not soluble to an aqueous medium but is swellable, without dissolving, when in contact with an electrolytic solution (organic electrolytic solution) commonly used in lithium ion secondary batteries. The positive electrode active material containing at least one of Mn and Ni contains an alkali component, such as lithium carbonate (Li₂CO₃) or lithium hydroxide (LiOH), which is a residue from the production process. In this regard, the positive electrode active material coated with the coating material containing the coating resin can suppress the elution of a corrosive material, suppressing corrosion of the current collector formed into a positive electrode. The solubility parameter (SP) value of the coating resin having the above-described characteristics is preferably 8.0 (cal/cm³)^{1/2} or greater, and more preferably 10 (cal/cm³)^{1/2} or greater; but is preferably 13 (cal/cm³)^{1/2} or less, and more preferably 12 (cal/cm³)^{1/2} or less. The SP value is measured in accordance with the method described in JP2011-134807A. When the coating resin has an SP value of 8.0 (cal/cm³)^{1/2} or greater, the coating resin sufficiently swells in the electrolytic solution, so that the lithium ions in the lithium ion secondary battery would not be prevented from migrating, which consequently achieves low internal resistance. When the coating resin has an SP value of 13 (cal/cm³)^{1/2} or less, it is prevented that the coating resin in the slurry composition be dissolved into the aqueous medium, thereby suppressing elution of the alkali component from the positive electrode active material. The coating material may be applied to the positive electrode active material by, for example, fluidized-bed granulation, spray granulation, coagulant precipitation, or pH precipitation.

The blending amount or particle size of the positive electrode active material used herein may be, but not limited to, the same amount or particle size as the positive electrode active material conventionally used.

### <Conductive Material>

The conductive material ensures electrical contact between the positive electrode active materials. The conductive material may be, but not limited to, any conductive material known in the art. Specific examples of the conductive material include conductive carbon materials, such as acetylene black, Ketjen black®, carbon black, and graphite; fibers of various metals; and foil. Of these materials, acetylene black, Ketjen black®, carbon black, or graphite may preferably be used to improve the electrical contact between the positive electrode active materials as well as to improve the electrical characteristics of the lithium ion secondary battery including the positive electrode formed with the slurry composition. Acetylene black is particularly preferred.

The blending amount of the conductive material is usually 0.01-20 parts by mass, preferably 1-10 parts by mass, per 100 parts by mass of the positive electrode active material. If the blending amount of the conductive material is excessively small, electrical contact between the positive electrode active materials would not be sufficiently ensured, which consequently fails to provide the lithium ion secondary battery with sufficient electrical characteristics. Conversely, If the blending amount of the conductive material is excessively large, stability of the slurry composition as well as the density of the positive electrode active material layer in the positive electrode would be decreased, which consequently fails to sufficiently increase the capacity of the lithium ion secondary battery.

### <Viscosity Modifier>

The viscosity modifier modifies the viscosity of the slurry composition to facilitate the application of the slurry composition onto the current collector. The viscosity modifier may be a water-soluble polymer. Specific examples of the viscosity modifier include cellulosic polymers such as carboxymethyl cellulose, methyl cellulose, and hydroxypropyl cellulose; ammonium salts and alkali metal salts of these cellulosic polymers; modified or unmodified poly(meth)acrylic acid; ammonium salts and alkali metal salts of such modified or unmodified poly(meth)acrylic acid; polyvinyl alcohols, such as modified or unmodified polyvinyl alcohol, copolymer of vinyl alcohol with acrylic acid or with acrylate, and copolymer of vinyl alcohol with maleic anhydride, with maleic acid, or with fumaric acid; polyethylene glycol; polyvinyl pyrrolidone; starch oxide; starch phosphate; casein; various kinds of modified starches; and acrylonitrile-butadiene copolymer hydride.

The term "(meth)acryl" as used herein means acryl and/or methacryl, and the term "(meth)acrylic acid" means acrylic acid and/or methacrylic acid.

The blending amount of the viscosity modifier is usually 0.01-10 parts by mass, preferably 0.3-2 parts by mass, per 100 parts by mass of the positive electrode active material. When the viscosity modifier is blended in an amount within the above range, a slurry composition with good viscosity can be obtained. This allows intended application of the slurry composition onto the current collector in forming the positive electrode, consequently giving a long product-service life to the resulting positive electrode.

### <Particulate Binder>

The particulate binder is a component that can retain the components contained in the positive electrode active material layer so as to prevent the components contained in the positive electrode active material layer from being separated from the positive electrode active material layer in the positive electrode produced by forming the positive electrode active material layer on the current collector with the disclosed slurry composition. When immersed in an electrolytic solution, the particulate binder in the positive electrode active material layer generally maintains the granulous shape, while absorbing the electrolytic solution and swelling so as to bind the positive electrode active materials and prevent the positive electrode active material from coming off the current collector.

The particulate binder used in the disclosed slurry composition comprises a polymer dispersible into an aqueous medium such as water. Such a polymer is hereinafter referred to as "particulate polymer". The particulate polymer may be used alone by one kind or in combination of two or more kinds.

Examples of a preferred particulate polymer include a diene polymer, an acrylic polymer, a fluoropolymer, and a silicone polymer. Of these polymers, the acrylic polymer is preferred for its superior oxidation resistance.

The acrylic polymer used as the particulate polymer is dispersible in water, and contains (meth)acrylic acid ester monomer units. Of the acrylic polymers containing the (meth)acrylic acid ester monomer units, an acrylic polymer further containing at least one of α,β-unsaturated nitrile monomer units and acid functionality-containing monomer units is preferred, and an acrylic polymer further containing both of the α,β-unsaturated nitrile monomer units and the acid functionality-containing monomer units is more preferred. The acrylic polymer containing the above monomer units further improves the strength and binding capacity of the particulate binder.

The phrase "containing monomer units" as used herein means that "a polymer obtained with a monomer contains a structural unit derived from the monomer".

Examples of the (meth)acrylic acid ester monomer that can be used to produce the acrylic polymer include acrylic acid alkyl esters, such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters, such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Of these, monomers having an alkyl group, which bonds with noncarbonylic oxygen atoms, with carbon number of 4 to 13 are preferred, and n-butyl acrylate and 2-ethylhexyl acrylate are particularly preferred. This is because, when used in a positive electrode of a lithium ion secondary battery, the polymer obtained with those monomers moderately swell in the electrolytic solution, without being eluted into the electrolytic solution, to exhibit good ion conductivity and extend the battery life. These monomers may be used alone or in combination of at least two thereof.

The content percentage of the (meth)acrylic acid ester monomer unit contained in the acrylic polymer used as the particulate polymer is preferably 50% by mass or greater and more preferably 60% by mass or greater, but preferably 95% by mass or less and more preferably 90% by mass or less. By setting the content percentage of the monomer unit derived from (meth)acrylic acid ester monomer to 50% by mass or greater, flexibility of the particulate polymer can be increased, which makes the positive electrode obtained with the slurry composition less breakable. By setting the content percentage of the monomer unit derived from (meth)acrylic acid ester monomer to 95% by mass or less, mechanical strength and binding capacity of the particulate polymer can be improved.

To improve mechanical strength and binding capacity, α,β-unsaturated nitrile monomer may preferably be acrylonitrile or methacrylonitrile. Acrylonitrile is particularly preferred. Such monomers may be used alone or in combination of at least two thereof.

The content percentage of α,β-unsaturated nitrile monomer unit in the acrylic polymer used as the particulate polymer is preferably 3% by mass or greater and more preferably 5% by mass or greater, but preferably 40% by mass or less and more preferably 30% by mass or less. By setting the content percentage of the α,β-unsaturated nitrile monomer unit to 3% by mass or greater, mechanical strength of the particulate polymer can be improved to increase the adherence between the positive electrode active material and the current collector and between the positive electrode active materials. By setting the content percentage of the α,β-unsaturated nitrile monomer unit to 40% by mass or less, flexibility of the particulate polymer can be increased, which makes the positive electrode obtained with the slurry composition less breakable.

Examples of the acid functionality-containing monomer that can be used to produce the acrylic polymer include a monomer having a carboxylic acid group, a monomer having a sulfonate group, and a monomer having a phosphate group.

Examples of the monomers having a carboxylic acid group include monocarboxylic acid and derivatives thereof, dicarboxylic acid, its acid anhydride, and their derivatives.

Examples of the monocarboxylic acid include acrylic acid, methacrylic acid, and crotonic acid.

Examples of the derivatives of the monocarboxylic acid include 2-ethyl acrylic acid, isocrotonic acid, α-acetoxy acrylic acid, β-trans-aryloxy acrylic acid, α-chloro-β-E-methoxy acrylic acid, and β-diamino acrylic acid.

Examples of dicarboxylic acid include maleic acid, furmaric acid, and itaconic acid.

Examples of acid anhydride of dicarboxylic acid include maleic anhydride, acrylic acid anhydride, methyl maleic anhydride, and dimethyl maleic anhydride.

Examples of the derivatives of dicarboxylic acid include methylallyl maleic acid, such as methyl maleic acid, dimethyl maleic acid, phenyl maleic acid, chloro-maleic acid, dichloro-maleic acid, and fluoromaleic acid; and maleic acid esters, such as diphenyl maleate, nonyl maleate, decyl maleate, dodecyl maleate, octadecyl maleate, and fluoroalkyl maleate.

Examples of the monomer having the sulfonate group include vinyl sulfonic acid, methyl vinyl sulfonic acid, (meth)allyl sulfonic acid, styrene sulfonic acid, (meth)acrylic acid-2-ethyl sulfonate, 2-acrylamide-2-methyl propane sulfonic acid, and 3-allyloxy-2-hydroxypropane sulfonic acid.

The term "(meth)allyl" as used herein means allyl and/or methallyl.

Examples of the monomer having the phosphate group include 2-((meth)acryloyloxy)ethyl phosphate, methyl-2-(meth)acryloyloxyethyl phosphate, and ethyl-(meth)acryloyloxyethyl phosphate.

Of these acid functionality-containing monomers, acrylic acid, methacrylic acid, methyl methacrylate, itaconic acid, 2-acrylamide-2-methylpropanesulfonic acid (AMPS), and 2-((meth)acryloyloxy)ethyl phosphate are preferred. Acrylic acid, methacrylic acid, and itaconic acid are preferred to improve the preservation stability of the acrylic polymer. Itaconic acid is particularly preferred in this regard. These are used alone or in combination of at least two thereof.

The content percentage of the acid functionality-containing monomer unit in the acrylic polymer used as the particulate polymer is preferably 0.5% by mass or greater, more preferably 1% by mass or greater, and particularly preferably 1.5% by mass or greater; but preferably 5% by mass or less, more preferably 4% by mass or less. By setting the content percentage of the acid functionality-containing monomer unit to 0.5% by mass or greater, binding capacity of the particulate polymer can be increased to improve the cycle characteristics of the lithium ion secondary battery. By setting the content percentage of the acid functionality-containing monomer unit to 5% by mass of less, good production stability and preservation stability of the acrylic polymer can be obtained.

The acrylic polymer may contain a cross-linkable monomer unit in addition to the above-described monomer units.

Examples of the cross-linkable monomer include an epoxy group-containing monomer, a monomer containing a carbon-carbon double bond and an epoxy group, a monomer containing a halogen atom and an epoxy group, N-methylol amide group-containing monomer, oxetanyl group-containing monomer, oxazoline group-containing monomer, and a multifunctional monomer having two or more olefinic double bonds.

The content percentage of the cross-linkable monomer unit in the acrylic polymer used as the particulate polymer is preferably 0.01% by mass or greater and more preferably 0.05% by mass or greater, but preferably 0.5% by mass or less and more preferably 0.3% by mass or less. By setting the content percentage of the cross-linkable monomer unit to fall within the above range, the acrylic polymer can exhibit a moderate swelling property in the electrolytic solution, so that the rate characteristics and cycle characteristics of the lithium ion secondary battery including the positive electrode obtained with the slurry composition can be improved.

The acrylic polymer may further contain a monomer unit derived from monomers other than the above-described monomers. Examples of such a monomer unit include a polymer unit derived from a vinyl monomer and a hydroxy group-containing monomer unit.

Examples of the vinyl monomer include carboxylic acid esters having two or more carbon-carbon double bond, such as ethylene glycol dimethacrylate and diethylene glycol dimethacrylate; halogen atom-containing monomer, such as vinyl chloride and vinylidene chloride; vinyl esters, such as vinyl acetate, vinyl propionate, and vinyl butyrate; vinyl ethers, such as methyl vinyl ether, ethyl vinyl ether, and butyl vinyl ether; vinyl ketones, such as methyl vinyl ketone, ethyl vinyl ketone, butyl vinyl ketone, hexyl vinyl ketone, and isopropenyl vinyl ketone; and heterocycle-containing vinyl compounds, such as N-vinylpyrrolidone, vinylpyridine, and vinylimidazole.

Examples of the hydroxy group-containing monomer include ethylenic unsaturated alcohol, such as (meth)allyl alcohol, 3-butene-1-ol, and 5-hexene-1-ol; alkanol esters of ethylenic unsaturated carboxylic acid, such as 2-hydroxyethyl-acrylate, 2-hydroxypropyl-acrylate, 2-hydroxyethyl-methacrylate, 2-hydroxypropyl-methacrylate, di-2-hydroxyethyl-maleate, di-4-hydroxybutyl maleate, and di-2-hydroxypropyl itaconate; esters of (meth)acrylic acid and polyalkylene glycol represented by the general formula CH₂=CR¹-COO-(CₙH₂ₙ₋₁O)ₘ-H (where m represents an integer from 2 to 9, n represents an integer from 2 to 4, and R¹ represents hydrogen or a methyl group); mono(meth)acrylic acid esters of dihydroxy ester of dicarboxylic acid, such as 2-hydroxyethyl-2'-(meth)acryloyl oxyphthalate and 2-hydroxyethyl-2'-(meth)acryloyl oxysuccinate; vinyl ethers, such as 2-hydroxyethyl vinyl ether and 2-hydroxypropyl vinyl ether; mono(meth)allyl ethers of alkylene glycol, such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol(meth)monoallyl ethers, such as diethylene glycol mono(meth)allyl ether and dipropylene glycol mono(meth)allyl ether; glycerin mono(meth)allyl ether; mono(meth)allyl ether of halogen or hydroxy substitution of (poly)alkylene glycol, such as (meth)allyl-2-chloro-3-hydroxypropyl ether and (meth)allyl-2-hydroxy-3-chloropropyl ether; mono(meth)allyl ether of polyhydric phenol, such as eugenol and isoeugenol, and a halogen substitution thereof; and (meth)allyl thioethers of alkylene glycol, such as (meth)allyl-2-hydroxyethyl thioether and (meth)allyl-2-hydroxypropyl thioether.

These compounds are used alone or in combination of at least two thereof.

The particulate polymer, such as the above-described acrylic polymer, can be produced by any polymerization process, for example, by solution polymerization, suspension polymerization, bulk polymerization, or emulsion polymerization. Of these methods, emulsion polymerization that uses an emulsifier is preferred. In producing the particulate polymer by emulsion polymerization, at least a polyoxyethylenic surfactant (a), which is selected from the surfactants described below, is preferably used as the emulsifier used in the polymerization.

The polymerization method may be addition polymerization such as ionic polymerization, radical polymerization, and living radical polymerization. The polymerization initiator may be any polymerization initiator known in the art, e.g., the polymerization initiator described in JP2012-184201A.

The particulate polymer is usually produced in the form of dispersion liquid in which the particulate polymers are dispersed as particulates in an aqueous medium. The particulate polymer takes the form of particulate dispersed in an aqueous medium also in the slurry composition. When dispersed in an aqueous medium in the form of particulates, particles of the particulate polymer has a 50% volume average particle size of preferably 50 nm or larger, more preferably 70 nm or larger, and further preferably 90 nm or larger; but preferably 500 nm or smaller, more preferably 400 nm or smaller, and further preferably 250 nm or smaller. By setting the volume average particle size of the particles of the particulate polymer to 50 nm or larger, the stability of the slurry composition can be increased. On the other hand, by setting the volume average particle size of the particles of the particulate polymer to 500 nm or smaller, the binding capacity of the particulate polymer can be increased.

The particulate polymer is usually preserved and transported in the form of the above-described dispersion liquid. The solid content concentration of such a dispersion liquid is usually 15% by mass or greater, preferably 20% by mass or greater, and more preferably 30% by mass or greater; but usually 70% by mass or less, preferably 65% by mass or less, and more preferably 60% by mass or less. When the solid content concentration of the dispersion liquid is within the above range, good workability upon production of the slurry composition can be achieved.

The pH of the dispersion liquid containing the particulate polymer is preferably 5 or greater and more preferably 7 or greater, but preferably 13 or less and more preferably 11 or less. By setting the pH of the dispersion liquid to fall within the above range, the stability of the particulate polymer can be improved.

The glass-transition temperature (Tg) of the particulate polymer is preferably -50°C or higher, more preferably -45°C or higher, and particularly preferably -40°C or higher; but preferably 25°C or lower, more preferably 15°C or lower, and particularly preferably 5°C or lower. By setting the glass-transition temperature of the particulate polymer to fall within the above range, strength and flexibility of the positive electrode produced with the slurry composition can be improved to achieve high output characteristics. The glass-transition temperature of the particulate polymer can be adjusted by, for example, changing combination of monomers for building up monomer unit.

The content of the particulate binder (or particulate polymer) contained in the slurry composition of the disclosure is preferably 0.1 parts by mass or greater and more preferably 0.5 parts by mass or greater, but preferably 10 parts by mass or less and more preferably 5 parts by mass or less, per 100 parts by mass of the positive electrode active material in terms of solid content. By setting the content of the particulate polymer to 0.1 parts by mass or greater per 100 parts by mass of the positive electrode active material, the binding capacity between the positive electrode active materials and between the positive electrode active material and the current collector can be increased, which provides good output characteristics and gives a longer battery life to the lithium ion secondary battery that uses the particulate polymer. By setting the content of the particulate polymer to 10 parts by mass or less per 100 parts by mass of the positive electrode active material, the migration of the lithium ions can be blocked by the particulate polymer when the positive electrode obtained with the slurry composition is used in the lithium ion secondary battery, which consequently achieves low internal resistance of the lithium ion secondary battery.

### <Surfactant>

The surfactant is a component that works as a dispersant that disperses the positive electrode active material, conductive material, particulate binder, and the like in the slurry composition in an intended manner.

In a slurry composition that uses a particulate polymer prepared by emulsion polymerization as the particulate binder, the surfactant may be the emulsifier used in the emulsion polymerization. In other words, the slurry composition may be prepared by mixing the particulate polymer produced by using the surfactant described below as the emulsifier, the positive electrode active material, the conductive material, the viscosity modifier, and the aqueous medium as a dispersion medium. In this manner, the slurry composition may contain the surfactant used as the emulsifier.

The slurry composition of the disclosure contains both of
a polyoxyethylenic surfactant (a), and
a sulfosuccinic acid ester or its salt (b)
as a surfactant. The slurry composition may contain both of sulfosuccinic acid ester and the salt of sulfosuccinic acid ester as the above surfactant (b). The slurry composition may also contain a surfactant other than (a) and (b) above.

When the slurry composition contains the polyoxyethylenic surfactant, the slurry composition, when used to form a positive electrode active material layer on the current collector, may provide a positive electrode material layer having a uniform thickness with suppressed bulging along the edge portion. The bulging along the edge portion can also be suppressed with a viscosity modifier that exhibits a relatively large volume contraction when dried, such as carboxymethyl cellulose and the like.

Additionally, when the slurry composition contains the polyoxyethylenic surfactant, the slurry composition may be uniformly applied onto the current collector, even if the surface is stained with oil components or the like, to provide a positive electrode active material layer having a uniform thickness.

While the slurry composition provides the positive electrode active material layer having a uniform thickness when containing the polyoxyethylenic surfactant, such a slurry composition may still involve a problem of persistent bubbles generated upon preparation of the slurry composition. However, the slurry composition, when it contains a sulfosuccinic acid ester or its salt in combination with the polyoxyethylenic surfactant, would assist elimination of the bubbles in the slurry composition, so that generation of numerous defects (or pin holes) in the positive electrode active material layer caused by the bubbles would be suppressed. This consequently achieves production of desired positive electrodes, thereby providing a lithium ion secondary battery with good electric characteristics, for example output characteristics.

Examples of the polyoxyethylenic surfactant include a polyoxyethylenic nonionic surfactant and a polyoxyethylene sulfate salt.

Specific examples of the polyoxyethylenic nonionic surfactant include polyoxyethylene sorbitan lauryl ester, polyoxyethylene-polyoxypropylene block copolymer, polyoxyethylene alkyl ether, polyoxyethylene alkenyl ether, and polyoxyethylene alkyl aryl ether such as polyoxyethylene nonylphenyl ether.

An example of the polyoxyethylene sulfate salt includes ethoxy sulfate salt, and examples of the ethoxy sulfate salt include sodium salt of polyoxyethylene alkyl ether sulfate, such as sodium salt of polyoxyethylene lauryl ether sulfate; sodium salt of polyoxyethylene alkenyl ether sulfate; and sodium salt of polyoxyethylene nonylphenyl ether sulfate.

Of these polyoxyethylenic surfactants, ethoxy sulfate salt is preferred, and sodium salt of polyoxyethylene alkyl ether sulfate and sodium salt of polyoxyethylene alkenyl ether sulfate are particularly preferred. The ethoxy sulfate salt, which have a strong surface active effect, sufficiently suppress the occurrence of bulging along the edge portion of the positive electrode active material layer, even when blended in a small amount, while exhibiting good emulsifying function if used as an emulsifier. In a word, the blending amount of the polyoxyethylenic surfactant can be reduced if ethoxy sulfate salt is used as the surfactant. This suppresses an increase in internal resistance of the lithium ion secondary battery obtained with the slurry composition containing ethoxy sulfate salt, providing a lithium ion secondary battery having good electrical characteristics.

The content of the polyoxyethylenic surfactant in the slurry composition of the disclosure is preferably 2.0 parts by mass or less, more preferably 1.5 parts by mass or less, and particularly preferably 0.5 parts by mass or less; but preferably 0.1 parts by mass or greater and more preferably 0.2 parts by mass or greater, per 100 parts by mass of the particulate binder (in terms of solid content).

The slurry composition, if it contains an excessively large amount of polyoxyethylenic surfactant, may suffer from persistent bubbles in the slurry composition and may fail to suppress the generation of pin holes sufficiently. In addition, when used for a lithium ion secondary battery, the slurry composition, if it contains an excessively large amount of polyoxyethylenic surfactant, may also cause increase in internal resistance of the lithium ion secondary battery. These may possibly result in degradation in the electrical characteristics. Conversely, the slurry composition, if it contains an excessively small amount of the polyoxyethylenic surfactant, may fail to sufficiently suppress the occurrence of bulging along the edge portion of the positive electrode active material layer, and may also decrease production stability of the particulate polymer when the polyoxyethylenic surfactant is used as an emulsifier in emulsion polymerization of the particulate polymer.

Examples of the sulfosuccinic acid ester or its salt include dialkylsulfosuccinic acid or its salt, and monoalkylsulfosuccinic acid or its salt. The alkyl group of the above-described dialkylsulfosuccinic acid and monoalkylsulfosuccinic acid may be a linear or branched alkyl group, or an alkyl group having an alicyclic structure.

Examples of the dialkylsulfosuccinic acid or its salt include dioctylsulfosuccinic acid, dicyclohexylsulfosuccinic acid, ditridecylsulfosuccinic acid, diamylsulfosuccinic acid, diisobutylsulfosuccinic acid, and their sodium salts.

Examples of the monoalkylsulfosuccinic acid or its salt include octylsulfosuccinic acid, cyclohexyl sulfosuccinic acid, and their sodium salts.

Of these sulfosuccinic acid esters or its salts, dialkylsulfosuccinic acid or its salt is preferred, and sodium dioctylsulfosuccinate and sodium diamylsulfosuccinate are particularly preferred. This is because sodium dioctylsulfosuccinate and sodium diamylsulfosuccinate, which have superior biodegradability, allow easy treatment of the effluent produced in the preparation of the particulate polymer and the slurry composition.

The content of the sulfosuccinic acid ester or its salt in the slurry composition is preferably 5.0 parts by mass or less, more preferably 3.0 parts by mass or less, further preferably 2.5 parts by mass or less, and particularly preferably 2.0 parts by mass or less; but preferably 0.2 parts by mass or greater, more preferably 0.5 parts by mass or greater, and particularly preferably 1.0 part by mass or greater, per 100 parts by mass of the particulate binder (in terms of solid content).

The slurry composition, if it contains an excessively large amount of sulfosuccinic acid ester or its salt, may cause, when used in a lithium ion secondary battery, an increase in internal resistance of the lithium ion secondary battery, possibly causing degradation in the electrical characteristics. Conversely, the slurry composition, if it contains an excessively small amount of sulfosuccinic acid ester or its salt, may suffer from persistent bubbles in the slurry composition and may fail to sufficiently suppress the generation of pin holes.

The total content of the polyoxyethylenic surfactant and the sulfosuccinic acid ester or its salt in the slurry composition is preferably 5.0 parts by mass or less, more preferably 4.0 parts by mass or less, and particularly preferably 3.0 parts by mass or less, per 100 parts by mass of the particulate binder (in terms of solid content).

The slurry composition, if it contains an excessively large total amount of the polyoxyethylenic surfactant and the sulfosuccinic acid ester or its salt, may cause, when used in a lithium ion secondary battery, an increase in internal resistance of the lithium ion secondary battery, possibly causing degradation in the electrical characteristics.

The ratio (mass ratio) of the content of the sulfosuccinic acid ester or its salt to the content of the polyoxyethylenic surfactant is preferably 1.5 or greater, more preferably 1.7 or greater, particularly preferably 2.0 or greater; but preferably 9.0 or less, more preferably 5.0 or less, and particularly preferably 3.0 or less.

The slurry composition, if it contains an excessively small amount of the sulfosuccinic acid ester or its salt relative to the polyoxyethylenic surfactant, may suffer from persistent bubbles in the slurry composition and may fail to sufficiently suppress the generation of pin holes. On the other hand, the slurry composition, if it contains an excessively large amount of the sulfosuccinic acid ester or its salt relative to the polyoxyethylenic surfactant, tends to suffer from a disadvantage rather than an advantage; that is, the disadvantage that the lithium ion secondary battery formed with the slurry composition increases the internal resistance to degrade in the electrical characteristics would outweigh the advantage that bubbles in the slurry composition can be easily eliminated.

### <Other Components>

The slurry composition of the disclosure may further contain, for example, a reinforcing agent, an antioxidant, an additive for electrolytic solution having a function of suppressing decomposition of the electrolytic solution, in addition to the above-described components. These other components may be selected from those that are publicly known, such as those described for example in WO2012/036260 or JP2012-204303A.

### <Preparation of Slurry Composition>

The slurry composition of the disclosure can be prepared by dispersing the above-described components in a dispersion medium, or specifically in an aqueous medium. Specifically, the slurry composition can be prepared by mixing the above-described components and the aqueous medium with the use of a mixer such as a ball mill, a sand mill, a bead mill, a pigment disperser, a grinding machine, an ultrasonic disperser, a homogenizer, a planetary mixer, and FILMIX.

Typically, the aqueous medium used is water; however, an aqueous solution of any compound or a mixed solution of a small amount of organic medium and water may also be used. The solid content concentration of the slurry composition may for example be 10-80% by mass to ensure that the components are uniformly dispersed. Mixing of the above-described components with the aqueous medium may be usually performed at a temperature ranging from room temperature to 80°C for 10 minutes to a few hours.

If the particulate polymer synthesized through emulsion polymerization is blended to the slurry composition as a particulate binder, the above-described surfactant may be used as an emulsifier and the surfactant used as the emulsifier may be blended into the slurry composition in the form of a dispersion liquid together with the particulate polymer. The surfactant used as an emulsifier may include both of the polyoxyethylenic surfactant and the sulfosuccinic acid ester or its salt as an emulsifier; however, to sufficiently suppress the occurrence of bulging along the edge portion of the positive electrode active material layer prepared with the slurry composition, the surfactant should at least include the polyoxyethylenic surfactant as an emulsifier. When using the polyoxyethylenic surfactant as an emulsifier, sulfosuccinate ester or its salt may not be used in the emulsion polymerization, but may be added in the preparation of the slurry.

### (Method of Producing Positive Electrode for Lithium Ion Secondary Battery)

The method of producing the positive electrode for a lithium ion secondary battery of the disclosure comprises applying the above-described slurry composition for the positive electrode of a lithium ion secondary battery onto a current collector (application step) and drying the slurry composition for the positive electrode of a lithium ion secondary battery applied onto the current collector to form a positive electrode active material layer on the current collector (drying step).

### <Application Step>

The above-described slurry composition for the positive electrode of a lithium ion secondary battery may be applied onto the current collector with any method publicly known. Specifically, the slurry composition may be applied for example by doctor blading, dip coating, reverse roll coating, direct roll coating, gravure coating, extrusion coating, or brush coating. The slurry composition may be applied onto one side or both sides of the current collector. The thickness of the slurry coating applied onto the current collector before drying may be properly determined in accordance with the thickness of the positive electrode active material layer to be obtained after drying.

The current collector to be coated with the slurry composition is made of a material having electrical conductivity and electrochemical durability. Specifically, the current collector may be made of aluminum or aluminum alloy. The current collector may also be made of combination of aluminum and aluminum alloy or combination of different kinds of aluminum alloys. Aluminum and aluminum alloy are heat resistant and electrochemically stable, so that they are superior material for the current collector.

Aluminum foil is generally widely used as the current collector. However, aluminum foil, which is formed by rolling a block of aluminum, contains oil or other components on its surface that were used to allow smooth sliding in the rolling process. Therefore, the current collector made of aluminum foil usually requires removal of the oil or other components from the surface before application of a slurry composition, so as to prevent the aqueous slurry composition from being repelled by the residual oil component on the surface. However, the slurry composition of the disclosure, which contains polyoxyethylenic surfactant as its surfactant, allows uniform application of the slurry composition even onto the inexpensive aluminum foil from which oil or other components have not been removed.

### <Drying Step>

The slurry composition applied on the current collector may be dried by any method publicly known, for example, drying by warm, hot, or low-humidity air; drying in a vacuum; or drying by irradiation of infrared light or electron beams. The slurry composition on the current collector dried as such forms a positive electrode active material layer on the current collector to provide the positive electrode for a lithium ion secondary battery that includes the current collector and the positive electrode active material layer.

After the drying step, the positive electrode active material layer may be further subjected to a pressing treatment, such as mold pressing or roll pressing. The pressing treatment increases the adherence between the positive electrode active material layer and the current collector.

### (Positive Electrode for Lithium Ion Secondary Battery)

The positive electrode for a lithium ion secondary battery of the disclosure may be produced by using the above-described slurry composition and employing the above-described method of producing the positive electrode for a lithium ion secondary battery.

The positive electrode for a lithium ion secondary battery of the disclosure includes a current collector and a positive electrode active material layer formed on the current collector, wherein the positive electrode active material layer at least contains a positive electrode active material, a conductive material, a viscosity modifier, a particulate binder, and a surfactant. The positive electrode active material, the conductive material, the viscosity modifier, the particulate binder, and the surfactant contained in the positive electrode are those that have been contained in the slurry composition of the disclosure. The preferred ratio of the components in the positive electrode is the same as the preferred ratio of the components in the slurry composition.

The positive electrode for a lithium ion secondary battery of the disclosure includes the positive electrode active material layer that contains a polyoxyethylenic surfactant and a sulfosuccinic acid ester or its salt, which suppresses both the generation of pin holes and the occurrence of bulging along the edge portion of the positive electrode active material layer. The positive electrode for a lithium ion secondary battery of the disclosure thus provides a lithium ion secondary battery with good electrical characteristics.

### (Lithium Ion Secondary Battery)

The lithium ion secondary battery of the disclosure includes a positive electrode, a negative electrode, an electrolytic solution, and a separator, wherein the positive electrode is the above-described positive electrode for a lithium ion secondary battery.

### <Negative Electrode>

The negative electrode of the lithium ion secondary battery may be any negative electrode known in the art that is used as the negative electrode for a lithium ion secondary battery. Specifically, the negative electrode may for example be a thin sheet of metal lithium or an electrode having a negative electrode active material layer formed on a current collector.

The current collector may be made of a metal material such as iron, copper, aluminum, nickel, stainless steel, titan, tantalum, gold, and platinum. The negative electrode active material layer may include a negative electrode active material and a binder.

### <Electrolytic Solution>

The electrolytic solution may be formed by dissolving an electrolyte in a solvent.

The solvent may be an organic solvent that can dissolve an electrolyte. Specifically, the solvent may be an alkyl carbonate solvent to which a viscosity modification solvent is added. Examples of the alkyl carbonate solvent include ethylene carbonate, propylene carbonate, and γ-butyrolactone. Examples of the viscosity modification solvent include 2,5-dimethyltetrahydrofuran, tetrahydrofuran, diethyl carbonate, ethylmethyl carbonate, dimethyl carbonate, methyl acetate, dimethoxyethane, dioxolane, methyl propionate, and methyl formate.

The electrolyte may be a lithium salt. Examples of the lithium salt that may be used include those described in JP2012-204303A. Of the lithium salts, LiPF₆, LiClO₄, and CF₃SO₃Li are preferred as electrolytes because they readily dissolve in organic solvents and exhibit a high degree of dissociation.

### <Separator>

Examples of the separator that may be used in the disclosed embodiments include those described in JP2012-204303A. Of these separators, a fine porous membrane made of polyolefinic (i.e., polyethylene, polypropylene, polybutene, and polyvinyl chloride) resin is preferred, because such a membrane can reduce the total thickness of the separator, which increases the ratio of the electrode active material in the secondary battery, consequently increasing the capacity per volume.

### <Method of Producing Lithium Ion Secondary Battery>

The lithium ion secondary battery of the disclosure is produced for example by layering a positive electrode and a negative electrode by interposing a separator therebetween, rolling or folding the resulting laminate as necessary in accordance with the battery shape, placing it in a battery container, filling the battery container with an electrolytic solution, and sealing the container. To prevent pressure increase inside the lithium ion secondary battery and occurrence of overcharge/overdischarge and the like, the lithium ion secondary battery may include an overcurrent preventing device such as a fuse and a PTC device, expanded metal, and a lead plate, as necessary. The secondary battery may take any shape such as a coin, a button, a sheet, a cylinder, a square, and a plane. The lithium ion secondary battery provided as such includes the positive electrode that would not suffer from generation of too much pin holes or significant bulging along the edge portion of the positive electrode active material layer, which consequently provides good electrical characteristics.

### EXAMPLES

Hereinafter, the disclosed products and method will be described with reference to Examples; however, the disclosure is not limited to those demonstrated in the Examples. In the following, "%" and "parts" used in expressing quantities are by mass, unless otherwise specified.

In the following Examples including the Comparative Examples, the number of defects on the electrode surface, smoothness of the positive electrode active material layer, peel strength, and output characteristics were evaluated with the following methods.

### <Number of Defects on Electrode Surface>

A test piece of 5 cm by 10cm was cut out from a web of the positive electrode having the positive electrode active material layer, before subjecting it to roll pressing. The test piece was visually inspected for the number of pin holes (or defects) having a diameter of at least 0.5 mm present on the surface of the test piece, and rated based on the criteria below:
A: zero pin holes observed
B: 1-4 pin holes observed
C: 5-9 pin holes observed
D: 10 or more pin holes observed

### <Smoothness of Positive Electrode Active Material Layer>

The web of the positive electrode having the positive electrode active material layer before subjected to roll pressing was measured for its layer thicknesses at 10 locations along the edge portion within 2 cm from each edge in the width direction and also at 10 locations along the center portion within 2 cm from the center in the width direction. The layer thicknesses of the edge portion and those of the center portion were each averaged, and then an index of smoothness was calculated using the expression below and rated based on the criteria below. The smoothness index is the ratio of the absolute value of the difference between the average layer thickness of the edge portion and that of the center portion with respect to the average layer thickness of the center portion, expressed in percentage. Smaller smoothness index value represents higher smoothness of the positive electrode active material layer, which means superior coating property of the slurry composition.

Smoothness index = (|average of layer thicknesses along the edge portion - average of layer thicknesses along the center portion| / average of layer thicknesses along the center portion) × 100
A: the smoothness index being less than 5
B: the smoothness index being 5 or greater but less than 10
C: the smoothness index being 10 or greater but less than 20
D: the smoothness index being 20 or greater

### <Peel Strength>

The positive electrode having the positive electrode active material layer after subjected to roll pressing was cut into a slit with a dimension of 1.0 cm in width by 10 cm in length, obtaining a test piece. A piece of adhesive cellophane tape was then attached to the surface of the test piece on the positive electrode active material layer side. The adhesive cellophane tape used was the tape prescribed by JIS Z 1522. The test piece was then peeled off from the cellophane tape, which is secured to a test bed, from its one end toward the other end at a rate of 50 mm/min, to measure the stress caused by the peeling. The measurement was made 10 times to calculate the average of the stress. The average, determined as the peel strength (N/m), was rated based on the criteria below. A greater peel strength means better adherence of the positive electrode active material layer to the current collector.
A: the peel strength being 20 N/m or greater
B: the peel strength being 10 N/m or greater but less than 20 N/m
C: the peel strength being less than 10 N/m
D: the peel strength being less than 10 N/m with failure to apply uniform pressure at roll pressing

### <Output Characteristics>

The obtained lithium ion secondary battery was charged up to 4.2 V by constant-current method with a charging rate of 0.2 C under the temperature environment of 25°C and then discharged down to 3.0 V at a discharging rate of 0.2 C, to obtain the battery capacity at 0.2 C discharging. The battery was subsequently recharged up to 4.2 V by constant-current method with a charging rate of 0.2 C, and then discharged down to 3.0 V at a discharging rate of 2 C, to obtain the battery capacity at 2 C discharging. The same measurement was carried out for 10 lithium ion secondary batteries to calculate an average battery capacity for each of 0.2 C discharging and 2 C discharging. A capacity maintenance rate at 2 C discharging was then obtained by calculating the ratio of the average battery capacity Cap_{2C} at 2 C discharging to the average battery capacity Cap_{0.2C} at 0.2 C discharging; namely, (Cap_{2C}/Cap_{0.2C}) × 100%. Having obtained the capacity maintenance rate at 2 C discharging, output characteristics were rated based on the criteria below. A higher capacity maintenance rate at 2C discharging yields a larger discharge capacity at a high rate (2 C) discharging, which means superior output characteristics.
A: the capacity maintenance rate at 2 C discharging being 90% or higher
B: the capacity maintenance rate at 2 C discharging being 75% or higher but lower than 90%
C: the capacity maintenance rate at 2 C discharging being 60% or higher but lower than 75%
D: the capacity maintenance rate at 2 C discharging being 50% or higher but lower than 60%
E: the capacity maintenance rate at 2 C discharging being lower than 50% (caused due to non-uniform application of pressure at the roll pressing, which leads to non-uniformity in density of the positive electrode active material layer to seriously deteriorate the output characteristics)

### (EXAMPLE 1)

### <Preparation of Particulate Binder>

Polymerization can A was charged with 74 parts of deionized water; 0.2 parts of polyoxyethylene lauryl ether sodium sulfate (sodium salt of polyoxyethylene lauryl ether sulfate), which is a polyoxyethylenic surfactant; 0.3 parts of ammonium persulfate, which is a polymerization initiator; and 9.7 parts of deionized water; and was heated to 70°C and stirred for 30 minutes. Separately from this, another polymerization can B was charged with 76.0 parts of 2-ethylhexyl acrylate, which is a (meth)acrylic acid ester monomer; 22.0 parts of acrylonitrile, which is an α,β-unsaturated nitrile monomer; 2.0 parts of itaconic acid, which is an acid functionality-containing monomer; and 0.3 parts of polyoxyethylene lauryl ether sodium sulfate, which is a polyoxyethylenic surfactant. Polymerization can B was further charged with 74 parts of deionized water and stirred to produce an emulsion. The produced emulsion was gradually added to polymerization can A from polymerization can B over a period of about 200 minutes, and then stirred for about 180 minutes until at least 97% of the monomers were consumed. The mixture was then cooled to complete the reaction. Thereafter, the pH of the resultant was adjusted using 4% NaOH aqueous solution to obtain a water dispersion liquid of an acrylic polymer. The pH of the resulting water dispersion liquid was 8.0, and the acrylic polymer had a glass-transition temperature of -40°C and a particle size of 0.17 µm in a dispersed state. The resulting acrylic polymer was measured with 1H-NMR and was determined to be composed of 75.75% by mass 2-ethylhexyl acrylate unit, 22.25% by mass acrylonitrile unit, and 2.0% by mass itaconic acid unit.

### <Preparation of Slurry Composition for Positive Electrode of Lithium Ion Secondary Battery>

A planetary mixer equipped with a disper blade was charged with 100 parts of Li(Ni_{0.5}Co_{0.3}Mn_{0.2})O₂, whose surface is coated with a coating resin, having an SP value of 9.0 (cal/cm³)^{1/2}, which is a positive electrode active material; 2.0 parts of acetylene black (DENKA BLACK HS-100, manufactured by DENKI KAGAKU KOGYO KABUSHIKI KAISHA), which is a conductive material; 50 parts of carboxymethyl cellulose aqueous solution (2% concentration in terms of solid content) whose degree of etherification is 0.8, which is a viscosity modifier; and a moderate amount of water. The charged components were mixed at 25°C for 60 minutes. To the resulting mixed solution, 2.5 parts of the above-described particulates binder in the form of water dispersion of acrylic polymer (40% concentration in terms of solid content); 1.0 part of sodium dioctylsulfosuccinate, which is a salt of sulfosuccinic acid ester; and water were added to adjust the solid content concentration of the mixture to 62%. The mixture was then mixed at 25°C for 15 minutes to obtain a mixed solution. The obtained solution was subjected to a defoaming process under reduced pressure to provide the slurry composition for the positive electrodes of a lithium ion secondary battery.

### <Production of Positive Electrode for Lithium Ion Secondary Battery>

The slurry composition for the positive electrode of a lithium ion secondary battery obtained as above was applied onto a current collector made of aluminum foil having a thickness of 20 µm using a comma coater such that the film thickness after drying could be about 70 µm. The current collector with the slurry composition being applied was dried for 2 minutes by being transported through an oven at 60°C at a rate of 0.5 m/min, and heated at 120°C for 2 minutes to obtain a web of electrode (or specifically a web of positive electrode). The web of positive electrode obtained was then rolled by roll pressing to produce the positive electrode for a lithium ion secondary battery having a thickness of the positive electrode active material layer of 45 µm.

The positive electrode produced was evaluated for the number of defects on the electrode surface, smoothness of the positive electrode active material layer, and peel strength. The results are shown in Table 1.

### <Production of Negative Electrode for Lithium Ion Secondary Battery>

A planetary mixer equipped with a disper blade was charged with 100 parts of artificial graphite having a specific surface area of 4 m²/g and an average particle size of 24.5 µm, which is a negative electrode active material; and 50 parts of carboxymethyl cellulose aqueous solution (2% concentration in terms of solid content) whose degree of etherification is 0.8, which is a viscosity modifier. The mixer was further charged with a moderate amount of deionized water and was mixed at 25°C for 60 minutes. Subsequently, deionized water was added to adjust the solid content concentration to 52%, and then the mixture was further mixed at 25 °C for 15 minutes to obtain a mixed solution. To the mixed solution, 2 parts (40% concentration in terms of solid content) of styrene-butadiene copolymer having a particle size of 140 nm and a glass-transition temperature (Tg) of 10°C, which is a particulate binder; and deionized water were added to adjust the final solid content concentration to 42%, and then the mixture was mixed for additional 10 minutes. The resulting mixed solution was subjected to a defoaming process under reduced pressure to provide the slurry composition for the negative electrodes of a lithium ion secondary battery.

The slurry composition for the negative electrode of a lithium ion secondary battery produced as above was applied onto a piece of copper foil having a thickness of 20 µm using a comma coater, such that the film thickness after drying could become about 150 µm. The copper foil with the slurry composition applied was dried for 2 minutes by being transported through an oven at 60°C at a rate of 0.5 m/min, and heated at 120°C for 2 minutes to obtain a web of electrode (or specifically a web of negative electrode). The web of negative electrode obtained was then rolled by roll pressing to produce the negative electrode for a lithium ion secondary battery having a thickness of the negative electrode active material layer of 80 µm.

### <Production of Lithium Ion Secondary Battery>

The positive electrode for a lithium ion secondary battery produced as above was placed such that the surface of the current collector contacts with the exterior package made of aluminum. On the surface of the positive electrode active material layer of the positive electrode, a single layer separator made of polypropylene was placed. The separator, produced by a dry method, has a width of 65 mm, a length of 500 mm, and a thickness of 25 µm; and a porosity of 55%. On the separator, the negative electrode for a lithium ion secondary battery produced as above was placed such that the surface of the negative electrode active material layer of the negative electrode faces the separator. To this, a LiPF₆ solution at a concentration of 1.0 M, which is an electrolytic solution, was charged. The solvent of the LiPF₆ solution was a mixture of ethylene carbonate/ethylmethyl carbonate whose ratio was 3/7 in volume, to which vinylene carbonate was added as an additive in an amount of 2% by volume in a ratio of solvent. The aluminum exterior package was then closed with heat sealing at 150°C to tightly seal up the opening of the aluminum packaging material, and the lithium ion secondary battery was accordingly produced.

The lithium ion secondary battery produced as above was evaluated for its output characteristics. The results are shown in Table 1.

### (EXAMPLE 2)

Other than using 100 parts of Li(Ni_{0.5}CO_{0.3}Mn_{0.2})O₂ whose surface is uncoated with a coating resin as the positive electrode active material, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 1.

### (EXAMPLE 3)

Other than using 2.0 parts of Ketjen black (EC-300J, manufactured by Lion Corporation; primary particle size: about 40 nm) as the conductive material, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 1.

### (EXAMPLES 4-13)

Other than varying the blending amounts of polyoxyethylene lauryl ether sodium sulfate and sodium dioctylsulfosuccinate as shown in Table 1, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 1.

The blending amount of polyoxyethylene lauryl ether sodium sulfate was varied by changing the amount charged into polymerization can B.

### (EXAMPLE 14)

Other than using 100 parts of LiCoO₂ whose surface is uncoated with a coating resin as the positive electrode active material, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (EXAMPLE 15)

Other than using 100 parts of olivine-type lithium iron phosphate (LiFePO₄) whose surface is uncoated with a coating resin as the positive electrode active material, and changing the blending amount of acetylene black to 5.0 parts, the blending amount of carboxymethyl cellulose to 2.0 parts in terms of solid content, and the blending amount of the particulate binder to 3.0 parts in terms of solid content, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (EXAMPLE 16)

Other than using 2.0 parts of methacrylic acid as the acid functionality-containing monomer, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (EXAMPLE 17)

Other than using 0.5 parts of polyoxyethylene alkyl ether sodium sulfate (product name: LATEMUL E-118B; manufactured by Kao Corporation) as the polyoxyethylenic surfactant, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (EXAMPLE 18)

Other than using 0.5 parts of polyoxyethylene alkenyl ether sodium sulfate (product name: LATEMUL PD-104; manufactured by Kao Corporation) as the polyoxyethylenic surfactant, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (EXAMPLE 19)

Other than using 1.5 parts of polyoxyethylene lauryl ether as the polyoxyethylenic surfactant and changing the blending amount of sodium dioctylsulfosuccinate to 2.5 parts, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (EXAMPLE 20)

Other than using 1.5 parts of polyoxyethylene lauryl ether as the polyoxyethylenic surfactant and changing the blending amount of sodium dioctylsulfosuccinate to 4 parts, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (EXAMPLE 21)

Other than using 1.0 part of sodium dicyclohexylsulfosuccinate as the salt of sulfosuccinic acid ester, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (EXAMPLE 22)

Other than using 1.0 part of sodium monooctylsulfosuccinate as the salt of sulfosuccinic acid ester, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (EXAMPLE 23)

Other than using 1.0 part of dioctylsulfosuccinic acid as the sulfosuccinic acid ester in place of the salt of sulfosuccinic acid ester, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode active material layer, peel strength, and output characteristics. The results are shown in Table 2.

### (COMPARATIVE EXAMPLE 1)

Other than not blending the polyoxyethylene lauryl ether sodium sulfate as the polyoxyethylenic surfactant but still using sodium dioctylsulfosuccinate as the salt of sulfosuccinic acid ester, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. In this example, the web of positive electrode obtained had a considerably large difference in thickness between the edge portion and the center portion in the positive electrode active material layer, which did not allow uniform pressure application to the surface of the web of positive electrode upon roll pressing. The products were then evaluated for the number of defects on the electrode surface, smoothness of the positive electrode active material layer, peel strength, and output characteristics. The results are shown in Table 3.

### (COMPARATIVE EXAMPLE 2)

Other than not blending sodium dioctylsulfosuccinate as the salt of sulfosuccinic acid ester, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. The products were then evaluated for the number of defects on the electrode surface, smoothness of the positive electrode active material layer, peel strength, and output characteristics. The results are shown in Table 3.

### (COMPARATIVE EXAMPLE 3)

Other than using 0.5 parts of sodium dodecyldiphenylether sulfonate in place of polyoxyethylene lauryl ether sodium sulfate as the polyoxyethylenic surfactant and not blending sodium dioctylsulfosuccinate as the salt of sulfosuccinic acid ester, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. In this example, the web of positive electrode obtained had a considerably large difference in thickness between the edge portion and the center portion in the positive electrode active material layer, which did not allow uniform pressure application to the surface of the web of positive electrode upon roll pressing. The products were then evaluated for the number of defects on the electrode surface, smoothness of the positive electrode active material layer, peel strength, and output characteristics. The results are shown in Table 3.

### (COMPARATIVE EXAMPLE 4)

Other than changing the blending amount of sodium dodecyldiphenylether sulfonate to 1.5 parts, the procedure of Comparative Example 3 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. In this example, the web of positive electrode obtained had a considerably large difference in thickness between the edge portion and the center portion in the positive electrode active material layer, which did not allow uniform pressure application to the surface of the web of positive electrode upon roll pressing. The products were then evaluated for the number of defects on the electrode surface, smoothness of the positive electrode active material layer, peel strength, and output characteristics. The results are shown in Table 3.

### (COMPARATIVE EXAMPLE 5)

Other than using 1.5 parts of sodium dodecyldiphenylether sulfonate, in place of polyoxyethylene lauryl ether sodium sulfate as the polyoxyethylenic surfactant, and changing the blending amount of sodium dioctylsulfosuccinate as the salt of sulfosuccinic acid ester to 3.5 parts, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. In this example, the web of positive electrode obtained had a considerably large difference in thickness between the edge portion and the center portion in the positive electrode active material layer, which did not allow uniform pressure application to the surface of the web of positive electrode upon roll pressing. The products were then evaluated for the number of defects on the electrode surface, smoothness of the positive electrode active material layer, peel strength, and output characteristics. The results are shown in Table 3.

### (COMPARATIVE EXAMPLES 6-10)

Other than using 100 parts of LiCoO₂ whose surface is uncoated with a coating resin as the positive electrode active material, the procedures of Comparative Examples 1-5 were followed to produce the particulate binder, the slurry composition for the positive electrode of a lithium ion secondary battery, the positive electrode for a lithium ion secondary battery, the negative electrode for a lithium ion secondary battery, and the lithium ion secondary battery. In the Comparative Examples 6 and 8-10, the web of positive electrode obtained had a considerably large difference in thickness between the edge portion and the center portion in the positive electrode active material layer, which did not allow uniform pressure application to the surface of the web of positive electrode upon roll pressing. The products were then evaluated for the number of defects on the electrode surface, smoothness of the positive electrode active material layer, peel strength, and output characteristics. The results are shown in Table 3.

**[Table 1]**

| | | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 2 | Ex. 13 |
|---|---|---|---|---|---|---|---|---|---|---|---|---|---|---|---|---|
| | Positive electrode active material | Li(Ni_{0.5}Co_{0.2}Mn_{0.3})O₂ (Coated) [Pts. by mass] | | 100 | - | 100 | 100 | 100 | 100 | 100 | 100 | 100 | 100 | 100 | 100 | 100 |
| | | Li(Ni_{0.5}Co_{0.2}Mn_{0.3})O₂ (Uncoated) [Pts. by mass] | | - | 100 | - | - | - | - | - | - | - | - | - | - | - |
| | | LiCoO₂ (Uncoated) [Pts. by mass] | | - | - | - | - | - | - | - | - | - | - | - | - | - |
| | | LiFePO₄ (Uncoated) [Pts. by mass] | | - | - | - | - | - | - | - | - | - | - | - | - | - |
| | Conductive material | Acetylene black [Pts. by mass] | | 2 | 2 | - | 2 | 2 | 2 | 2 | 2 | 2 | 2 | 2 | 2 | 2 |
| | | Ketjen black [Pts. by mass] | | - | - | 2 | - | - | - | - | - | - | - | - | - | - |
| | Viscosity modifier | Carboxymethyl cellulose (in terms of solid content) [Pts. by mass] | | 1 | 1 | 1 | 1 | 1 | 1 | 1 | 1 | 1 | 1 | 1 | 1 | 1 |
| | Particulate binder | Blending amount (in terms of solid content) [Pts. by mass] | | 1 | 1 | 1 | 1 | 1 | 1 | 1 | 1 | 1 | 1 | 1 | 1 | 1 |
| | | α,β-unsaturated nitrile monomer | Acrylonitrile [Pts. by mass] | 22 | 22 | 22 | 22 | 22 | 22 | 22 | 22 | 22 | 22 | 22 | 22 | 22 |
| | | (Meth)acrylic acid ester monomer | 2-ethylhexyl acrylate [Pts. by mass] | 76 | 76 | 76 | 76 | 76 | 76 | 76 | 76 | 76 | 76 | 76 | 76 | 76 |
| | | Acid functionality-containing monomer | Itaconic acid by mass] | 2 | 2 | 2 | 2 | 2 | 2 | 2 | 2 | 2 | 2 | 2 | 2 | 2 |
| Slurry composition | | | Methacrylic acid [Pts. by mass] | - | - | - | - | - | - | - | - | - | - | - | - | - |
| | | Particle diameter [nm] | | 170 | 170 | 170 | 170 | 170 | 170 | 170 | 160 | 160 | 160 | 150 | 150 | 150 |
| | Surfactant *1 | (a) Polyoxyethylenic surfactant *1 | Polyoxyethylene lauryl ether sodium sulfate [Pts. by mass] | 0.5 | 0.5 | 0.5 | 0.5 | 0.5 | 0.5 | 0.5 | 1.5 | 1.5 | 1.5 | 2 | 2 | 2 |
| | | | Polyoxyethylene alkyl ether sodium sulfate [Pts. by mass] | - | - | - | - | - | - | - | - | - | - | - | - | - |
| | | | Polyoxyethylene alkenyl ether sodium sulfate [Pts. by mass] | - | - | - | - | - | - | - | - | - | - | - | - | - |
| | | | Polyoxyethylene lauryl ether [Pts. by mass] | - | - | - | - | - | - | - | - | - | - | - | - | - |
| | | (b) Sulfosuccinic acid ester and its salt *1 | Sodium dioctylsulfosuccinate [Pts. by mass] | 1 | 1 | 1 | 2.5 | 4.5 | *5* | 6 | 2 | 3.5 | 5 | 3 | *5* | *6* |
| | | | Sodium dicyclohexylsulfosuccinate [Pts. by mass] | - | - | - | - | - | - | - | - | - | - | - | - | - |
| | | | Sodium octylsulfosuccinate [Pts. by mass] | - | - | - | - | - | - | - | - | - | - | - | - | - |
| | | | Dioctylsulfosuccinic acid [Pts. by mass] | - | - | - | - | - | - | - | - | - | - | - | - | - |
| | | Other *1 | Sodium dodecyldiphenylether sulfonate [Pts. by mass] | - | - | - | - | - | - | - | - | - | - | - | - | - |
| | | Total amount (a)+(b) [Pts. by mass] *1 | | 1.5 | 1.5 | 1.5 | 3 | 5 | 5.5 | 6.5 | 3.5 | 5 | 6.5 | 5 | 7 | 8 |
| | | Mass ratio (b)/(a) [-] | | 2 | 2 | 2 | 5 | 9 | 10 | 12 | 1.3 | 2.3 | 3.3 | 1.5 | 2.5 | 3 |
| Evaluation results | Number of defects on electrode surface | | | A | A | A | A | A | A | A | B | A | A | C | B | B |
| | Smoothness of positive electrode active material layer | | | A | A | A | A | A | A | A | A | A | A | A | A | A |
| | Peel strength | | | A | A | B | A | A | A | A | B | A | A | B | B | B |
| | Output characteristics | | | A | B | C | A | B | C | C | B | B | C | C | C | D |

| | | | | | | | | | | | | | | | | |
|---|---|---|---|---|---|---|---|---|---|---|---|---|---|---|---|---|
| *1 Blending amount per 100 pts. by mass particulate binder | | | | | | | | | | | | | | | | |

**[Table 2]**

| | | | | Ex. 14 | Ex. 15 | Ex. 16 | Ex. 17 | Ex. 18 | Ex. 19 | Ex. 20 | Ex. 21 | Ex. 22 | Ex. 23 |
|---|---|---|---|---|---|---|---|---|---|---|---|---|---|
| | Positive electrode active material | Li(N_{0.5}Co_{0.2}Mn_{0.3})O₂ (Coated) [Pts. by mass] | | - | - | 100 | 100 | 100 | 100 | 100 | 100 | 100 | 100 |
| | | Li(Ni_{0.5}Co_{0.2}Mn_{0.3})O₂ (Uncoated) [Pts. by mass] | | - | - | - | - | - | - | - | - | - | - |
| | | LiCoO₂ (Uncoated) [Pts. by mass] | | 100 | - | - | - | - | - | - | - | - | - |
| | | LiFePO₄ (Uncoated) [Pts. by mass] | | - | 100 | - | - | - | - | - | - | - | - |
| | Conductive material | Acetylene black [Pts. by mass] | | 2 | 5 | 2 | 2 | 2 | 2 | 2 | 2 | 2 | 2 |
| | | Ketjen black [Pts. by mass] | | - | - | - | - | - | - | - | - | - | - |
| | Viscosity modifier | Carboxymethyl cellulose (in terms of solid content) [Pts. by mass] | | 1 | 2 | 1 | 1 | 1 | 1 | 1 | 1 | 1 | 1 |
| | Particulate binder | Blending amount (in terms of solid content) [Pts. by mass] | | 1 | 3 | 1 | 1 | 1 | 1 | 1 | 1 | 1 | 1 |
| | | α,β-unsaturated nitrile monomer | Acrylonitrile [Pts. by mass] | 22 | 22 | 22 | 22 | 22 | 22 | 22 | 22 | 22 | 22 |
| | | (Meth)acrylic acid ester monomer | 2-ethylhexyl acrylate [Pts. by mass] | 76 | 76 | 76 | 76 | 76 | 76 | 76 | 76 | 76 | 76 |
| | | Acid functionality-containing monomer | Itaconic acid [Pts. by mass] | 2 | 2 | - | 2 | 2 | 2 | 2 | 2 | 2 | 2 |
| | | | Methacrylic acid [Pts. by mass] | - | - | 2 | - | - | - | - | - | - | - |
| Slurry composition | | Particle diameter [nm] | | 170 | 170 | 170 | 180 | 180 | 200 | 200 | 170 | 170 | 170 |
| | Surfactant | (a) Polyoxyethylenic surfactant *1 | Polyoxyethylene lauryl ether sodium sulfate [Pts. by mass] | 0.5 | 0.5 | 0.5 | - | - | - | - | 0.5 | 0.5 | 0.5 |
| | | | Polyoxyethylene alkyl ether sodium sulfate [Pts. by mass] | - | - | - | 0.5 | - | - | - | - | - | - |
| | | | Polyoxyethylene alkenyl ether sodium sulfate [Pts. by mass] | - | - | - | - | 0.5 | - | - | - | - | - |
| | | | Polyoxyethylene lauryl ether [Pts. by mass] | - | - | - | - | - | 1.5 | 1.5 | - | - | - |
| | | (b) Sulfosuccinic acid ester and its salt *1 | Sodium dioctylsulfosuccinate [Pts. by mass] | 1 | 1 | 1 | 1 | 1 | 2.5 | 4 | - | - | - |
| | | | Sodium dicyclohexylsulfosuccinate [Pts. by mass] | - | - | - | - | - | - | - | 1 | - | - |
| | | | Sodium monooctylsulfosuccinate [Pts. by mass] | - | - | - | - | - | - | - | - | 1 | - |
| | | | Dioctylsulfosuccinic acid [Pts. by mass] | - | - | - | - | - | - | - | - | - | 1 |
| | | Other *1 | Sodium dodecyldiphenylether sulfonate [Pts. by mass] | - | - | - | - | - | - | - | - | - | - |
| | | Total amount (a)+(b) [Pts. by mass] *1 | | 1.5 | 1.5 | 1.5 | 1.5 | 1.5 | 4 | 5.5 | 1.5 | 1.5 | 1.5 |
| | | Mass ratio (b)/(a) [-] | | 2.0 | 2.0 | 2.0 | 2.0 | 2.0 | 1.7 | 2.7 | 2.0 | 2.0 | 2.0 |
| Evaluation results | Number of defects on electrode surface | | | A | A | A | A | A | B | A | A | B | A |
| | Smoothness of positive electrode active material layer | | | A | A | A | A | A | A | A | A | A | A |
| | Peel strength | | | A | A | A | A | A | B | B | A | A | A |
| | Output characteristics | | | A | A | A | A | A | B | C | A | A | A |

| | | | | | | | | | | | | | |
|---|---|---|---|---|---|---|---|---|---|---|---|---|---|
| *1 Blending amount per 100 pts. by mass particulate binder | | | | | | | | | | | | | |

**[Table 3]**

| | | | | Com. Ex. 1 | Com. Ex. 2 | Com. Ex. 3 | Com. Ex. 4 | Com. Ex. 5 | Com. Ex. 6 | Com. Ex. 7 | Com. Ex. 8 | Com. Ex. 9 | Com. Ex. 10 |
|---|---|---|---|---|---|---|---|---|---|---|---|---|---|
| | Positive electrode active material | Li(Ni_{0.5}Co_{0.2}Mn_{0.3})O₂ (Coated) [Pts. by mass] | | 100 | 100 | 100 | 100 | 100 | - | - | - | - | - |
| | | Li(N_{0.5} Co_{0.2}Mn_{0.3})O₂ (Uncoated) [Pts. by mass] | | - | - | - | - | - | - | - | - | - | - |
| | | LiCoO₂ (Uncoated) [Pts. by mass] | | - | - | - | - | - | 100 | 100 | 100 | 100 | 100 |
| | | LiFePO₄ (Uncoated) [Pts. by mass] | | - | - | - | - | - | - | - | - | - | - |
| | Conductive material | Acetylene black [Pts. by mass] | | 2 | 2 | 2 | 2 | 2 | 2 | 2 | 2 | 2 | 2 |
| | | Ketjen black [Pts. by mass] | | - | - | - | - | - | - | - | - | - | - |
| | Viscosity modifier | Carboxymethyl cellulose (in terms of solid content) [Pts. by mass] | | 1 | 1 | 1 | 1 | 1 | 1 | 1 | 1 | 1 | 1 |
| | Particulate binder | Blending amount (in terms of solid content) [Pts. by mass] | | 1 | 1 | 1 | 1 | 1 | 1 | 1 | 1 | 1 | 1 |
| | | αβ-unsaturated nitrile monomer | Acrylonitrile [Pts. by mass] | 22 | 22 | 22 | 22 | 22 | 22 | 22 | 22 | 22 | 22 |
| | | (Meth)acrylic acid ester monomer | 2-ethylhexyl acrylate [Pts. by mass] | 76 | 76 | 76 | 76 | 76 | 76 | 76 | 76 | 76 | 76 |
| | | Acid functionality-containing monomer | Itaconic acid [Pts. by mass] | 2 | 2 | 2 | 2 | 2 | 2 | 2 | 2 | 2 | 2 |
| | | | Methacrylic acid [Pts. by mass] | - | - | - | - | - | - | - | - | - | - |
| Slurry composition | | Particle diamter [nm] | | 170 | 180 | 170 | 160 | 160 | 170 | 180 | 170 | 160 | 160 |
| | Surfactant | (a) Polyoxyethylenic surfactant *1 | Polyoxyethylene lauryl ether sodium sulfate [Pts. by mass] | - | 0.5 | - | - | - | - | 0.5 | - | - | - |
| | | | Polyoxyethylene alkyl ether sodium sulfate [Pts. by mass] | - | - | - | - | - | - | - | - | - | - |
| | | | Polyoxyethylene alkenyl ether sodium sulfate [Pts. by mass] | - | - | - | - | - | - | - | - | - | - |
| | | | Polyoxyethylene lauryl ether [Pts. by mass] | - | - | - | - | - | - | - | - | - | - |
| | | (b) Sulfosuccinic acid ester and its salt *1 | Sodium dioctylsulfosuccinate [Pts. by mass] | 1 | - | - | - | 3.5 | 1 | - | - | - | 3.5 |
| | | | Sodium dicyclohexylsulfosuccinate [Pts. by mass] | - | - | - | - | - | - | - | - | - | - |
| | | | Sodium octylsulfosuccinate [Pts. by mass] | - | - | - | - | - | - | - | - | - | - |
| | | | Dioctylsulfosuccinic acid [Pts. by mass] | - | - | - | - | - | - | - | - | - | - |
| | | Other *1 | Sodium dodecyldiphenylether sulfonate [Pts. by mass] | - | - | 0.5 | 1.5 | 1.5 | - | - | 0.5 | 1.5 | 1.5 |
| | | Total amount (a)+(b) [Pts. by mass] *1 | | - | - | - | - | - | - | - | - | - | - |
| | | Mass ratio (b)/(a) [-] | | - | - | - | - | - | - | - | - | - | - |
| Evaluation results | Number of defects on electrode surface electrode surface | | | A | D | A | B | A | A | D | A | B | A |
| | Smoothness of electrode active material layer | | | C | A | D | D | D | C | A | D | D | D |
| | positive | | | D | C | D | D | D | D | C | D | D | D |
| | Peel strength Output characteristics | | | E | D | E | E | E | E | D | E | E | E |

| | | | | | | | | | | | | | |
|---|---|---|---|---|---|---|---|---|---|---|---|---|---|
| *1 Blending amount per 100 pts. by mass particulate binder | | | | | | | | | | | | | |

Tables 1-2 demonstrate that Examples 1-23, which use the polyoxyethylenic surfactant and the sulfosuccinic acid ester or its salt in combination, can suppress both the generation of pin holes and the occurrence of bulging along the edge portion of the positive electrode active material layer.

In contrast, Table 3 demonstrates that Comparative Examples 1, 3-6, and 8-10, which do not use the polyoxyethylenic surfactant, cannot suppress the occurrence of bulging along the edge portion of positive electrode active material layer. Table 3 further demonstrates that Comparative Examples 2 and 7, which do not use the sulfosuccinic acid ester or its salt, cannot suppress the generation of pin holes.

In particular, Examples 1 and 2 in Table 1 demonstrate that even if the positive electrode active material containing Ni or Mn is used, coating of the positive electrode active material would prevent the corrosion and thus provides good output characteristics. Examples of 1 and 3 demonstrate that use of acetylene black as a conductive material also provides good output characteristics.

Examples 1 and 4-13 in Table 1 demonstrate that by adjusting the blending amount of the polyoxyethylenic surfactant as well as the sulfosuccinic acid ester or its salt, both the generation of pin holes and the occurrence of bulging along the edge portion of the positive electrode active material layer can be suppressed, while achieving good output characteristics. Further, Example 1 and Examples 14-23 in Tables 1-2 demonstrate that by suitably selecting the materials, both the generation of pin holes and the occurrence of bulging along the edge portion of the positive electrode active material layer can be suppressed, while achieving good output characteristics and peel strength.

To confirm that the sulfosuccinic acid ester or its salt used in polymerization of the particulate binder demonstrates the same effects, the particulate binder, the slurry composition for the positive electrode of a lithium ion secondary battery, the positive electrode for a lithium ion secondary battery, and the lithium ion secondary battery were produced following the same procedures as that carried out for Examples 1-23, except that the total amount of the sulfosuccinic acid ester or its salt were charged into polymerization can B to carry out polymerization. The products were then evaluated and the results thereof were the same as the results obtained for Examples 1-23.

### INDUSTRIAL APPLICABILITY

The embodiments disclosed herein provide an aqueous slurry composition for the positive electrode of a lithium ion secondary battery, which achieves suppression of both the generation of pin holes and the occurrence of bulging along the edge portion of the positive electrode active material layer. The embodiments disclosed herein further provide a method of producing the positive electrode for a lithium ion secondary battery obtained with the aforementioned aqueous slurry composition.

The embodiments herein still further provide the positive electrode for a lithium ion secondary battery that would not suffer from the generation of pin holes or the occurrence of bulging along the edge portion of the positive electrode active material layer. The embodiments herein still further provide a lithium ion secondary battery that includes the aforementioned positive electrode for a lithium ion secondary battery and provide good electric characteristics.

## Claims

1. A slurry composition for a positive electrode of a lithium ion secondary battery, comprising: a positive electrode active material; a conductive material; a viscosity modifier; a particulate binder; a surfactant; and water, wherein
the surfactant comprises a polyoxyethylenic surfactant (a), and a sulfosuccinic acid ester or a salt thereof (b).

2. The slurry composition for a positive electrode of a lithium ion secondary battery according to claim 1, wherein the polyoxyethylenic surfactant (a) is polyoxyethylene sulfate salt.

3. The slurry composition for a positive electrode of a lithium ion secondary battery according to claim 1 or 2, wherein the content of the polyoxyethylenic surfactant (a) is 1.5 parts by mass or less per 100 parts by mass of the particulate binder.

4. The slurry composition for a positive electrode of a lithium ion secondary battery according to any one of claims 1 to 3, wherein the content of the sulfosuccinic acid ester or the salt thereof (b) is 5.0 parts by mass or less per 100 parts by mass of the particulate binder.

5. The slurry composition for a positive electrode of a lithium ion secondary battery according to any one of claims 1 to 4, wherein the total content of the polyoxyethylenic surfactant (a) and the sulfosuccinic acid ester or the salt thereof (b) is 5.0 parts by mass or less per 100 parts by mass of the particulate binder.

6. The slurry composition for a positive electrode of a lithium ion secondary battery according to any one of claims 1 to 5, wherein the ratio of the content of the sulfosuccinic acid ester or the salt thereof (b) to the content of the polyoxyethylenic surfactant (a) [(b)/(a)] is in a range from 1.5 to 5.0 in terms of mass ratio.

7. The slurry composition for a positive electrode of a lithium ion secondary battery according to any one of claims 1 to 6, wherein the particulate binder is a particulate acrylic polymer and the acrylic polymer includes 0.5% by mass or greater and 5% by mass or less of an acid functionality-containing monomer unit.

8. A method of producing a positive electrode for a lithium ion secondary battery, comprising:
applying the slurry composition for a positive electrode of a lithium ion secondary battery according to any one of claims 1 to 7 onto a current collector; and
drying the slurry composition for a positive electrode of a lithium ion secondary battery applied onto the current collector to form a positive electrode active material layer on the current collector.

9. A positive electrode for a lithium ion secondary battery, comprising: a positive electrode active material; a conductive material; a viscosity modifier; a particulate binder; and a surfactant, wherein
the surfactant comprises a polyoxyethylenic surfactant (a), and a sulfosuccinic acid ester or a salt thereof (b).

10. A lithium ion secondary battery, comprising: the positive electrode for a lithium ion secondary battery according to claim 9; a negative electrode; an electrolytic solution; and a separator.

## Patentansprüche

1. Eine Aufschlämmungs-Zusammensetzung für eine positive Elektrode einer Lithiumionen-Sekundärbatterie, umfassend: ein Positivelektroden-aktives Material; ein leitfähiges Material; einen Viskositätsmodulator; ein partikuläres Bindemittel; ein Tensid; und Wasser, wobei
das Tensid ein Polyoxyethylen-Tensid (a) und einen Sulfosuccinylsäurester oder ein Salz davon (b) umfasst.

2. Die Aufschlämmungs-Zusammensetzung für eine positive Elektrode einer Lithiumionen-Sekundärbatterie gemäß Anspruch 1, wobei das Polyoxyethylen-Tensid (a) ein Polyoxyethylensulfatsalz ist.

3. Die Aufschlämmungs-Zusammensetzung für eine positive Elektrode einer Lithiumionen-Sekundärbatterie gemäß Anspruch 1 oder 2, wobei der Gehalt an Polyoxyethylen-Tensid (a) 1,5 Gewichtsteile oder weniger pro 100 Gewichtsteile des partikulären Bindemittels beträgt.

4. Die Aufschlämmungs-Zusammensetzung für eine positive Elektrode einer Lithiumionen-Sekundärbatterie gemäß irgendeinem der Ansprüche 1 bis 3, wobei der Gehalt an Sulfosuccinylsäureester oder Salz davon (b) 5,0 Gewichtsteile oder weniger pro 100 Gewichtsteile des partikulären Bindemittels beträgt.

5. Die Aufschlämmungs-Zusammensetzung für eine positive Elektrode einer Lithiumionen-Sekundärbatterie gemäß irgendeinem der Ansprüche 1 bis 4, wobei der Gesamtgehalt an Polyoxyethylen-Tensid (a) und Sulfosuccinylsäureester oder Salz davon (b) 5,0 Gewichtsteile oder weniger pro 100 Gewichtsteile des partikulären Bindemittels beträgt.

6. Die Aufschlämmungs-Zusammensetzung für eine positive Elektrode einer Lithiumionen-Sekundärbatterie gemäß irgendeinem der Ansprüche 1 bis 5, wobei das Mengenverhältnis vom Sulfosuccinylsäureester oder Salz davon (b) zur Menge an Polyoxyethylen-Tensid (a) [(b)/(a)] sich in einem Bereich von 1,5 bis 5.0 bezogen auf das Gewichtsverhältnis befindet.

7. Die Aufschlämmungs-Zusammensetzung für eine positive Elektrode einer Lithiumionen-Sekundärbatterie gemäß irgendeinem der Ansprüche 1 bis 6, wobei das partikuläre Bindemittel ein partikuläres Acrylpolymer ist, und das Acrylpolymer 0,5 Gew.-% oder mehr und 5 Gew.-% oder weniger einer Monomereinheit mit einer Säuregruppe enthält.

8. Ein Verfahren zur Herstellung einer positiven Elektrode für eine Lithiumionen-Sekundärbatterie, umfassend:
Aufbringen der Aufschlämmungs-Zusammensetzung für eine positive Elektrode einer Lithiumionen-Sekundärbatterie gemäß irgendeinem der Ansprüche 1 bis 7 auf einen Stromkollektor; und
Trocknen der auf den Stromkollektor aufgebrachten Aufschlämmungs-Zusammensetzung für eine positive Elektrode einer Lithiumionen-Sekundärbatterie, so dass eine Schicht aus Positivelektroden-aktivem Material auf dem Stromkollektor gebildet wird.

9. Eine positive Elektrode für eine Lithiumionen-Sekundärbatterie, umfassend: ein Positivelektroden-aktives Material; ein leitfähiges Material; einen Viskositätsmodulator; ein partikuläres Bindemittel; und ein Tensid, wobei
das Tensid ein Polyoxyethylen-Tensid (a) und einen Sulfosuccinylsäurester oder ein Salz davon (b) umfasst.

10. Eine Lithiumionen-Sekundärbatterie, umfassend: die positive Elektrode für eine Lithiumionen-Sekundärbatterie gemäß Anspruch 9; eine negative Elektrode; eine Elektrolyt-Lösung; und einen Separator.

## Revendications

1. Une composition formant une pâte pour une électrode positive d'une batterie secondaire au lithium-ion, comprenant : une matière active d'électrode positive ; un matériau conducteur ; un modificateur de viscosité ; un liant particulaire ; un tensioactif ; et de l'eau, dans laquelle
le tensioactif comprend un tensioactif polyoxyéthylénique (a) et un ester d'acide sulfosuccinique ou un sel de celui-ci (b).

2. La composition formant une pâte pour une électrode positive d'une batterie secondaire au lithium-ion selon la revendication 1, dans laquelle le tensioactif polyoxyéthylénique (a) est un sel de sulfate de polyoxyéthylène.

3. La composition formant une pâte pour une électrode positive d'une batterie secondaire au lithium-ion selon la revendication 1 ou la revendication 2, dans laquelle la teneur en tensioactif polyoxyéthylénique (a) est de 1,5 partie en masse ou moins pour 100 parties en masse du liant particulaire.

4. La composition formant une pâte pour une électrode positive d'une batterie secondaire au lithium-ion selon l'une quelconque des revendications 1 à 3, dans laquelle la teneur en ester d'acide sulfosuccinique ou en sel de celui-ci (b) est de 5,0 parties en masse ou moins par 100 parties en masse du liant particulaire.

5. La composition formant une pâte pour une électrode positive d'une batterie secondaire au lithium-ion selon l'une quelconque des revendications 1 à 4, dans laquelle la teneur totale en tensioactif polyoxyéthylénique (a) et en ester d'acide sulfosuccinique ou en sel de celui-ci (b) est de 5,0 parties en masse ou moins par 100 parties en masse du liant particulaire.

6. La composition formant une pâte pour une électrode positive d'une batterie secondaire au lithium-ion selon l'une quelconque des revendications 1 à 5, dans laquelle le rapport de la teneur de l'ester d'acide sulfosuccinique ou du sel de celui-ci (b) et de la teneur en tensioactif polyoxyéthylénique (a) [(b) / (a)] se situe entre 1,5 et 5,0 en termes de rapport massique.

7. La composition formant une pâte pour une électrode positive d'une batterie secondaire au lithium-ion selon l'une quelconque des revendications 1 à 6, dans laquelle le liant particulaire est un polymère acrylique particulaire et le polymère acrylique comprend 0,5% en masse ou plus et 5% en masse ou moins d'une unité monomère contenant une fonctionnalité acide.

8. Un procédé de production d'une électrode positive pour une batterie secondaire au lithium-ion, comprenant :
le fait d'appliquer la composition formant une pâte pour une électrode positive d'une batterie secondaire au lithium-ion selon l'une quelconque des revendications 1 à 7 sur un collecteur de flux ; et
le fait de sécher la composition formant une pâte pour une électrode positive d'une batterie secondaire au lithium-ion appliquée sur le collecteur de flux pour former une couche de matériau actif d'électrode positive sur le collecteur de flux.

9. Une électrode positive pour une batterie secondaire au lithium-ion, comprenant : une matière active d'électrode positive ; un matériau conducteur ; un modificateur de viscosité ; un liant particulaire ; et un tensioactif, dans laquelle
le tensioactif comprend un tensioactif polyoxyéthylénique (a) et un ester d'acide sulfosuccinique ou un sel de celui-ci (b).

10. Une batterie secondaire au lithium-ion, comprenant : l'électrode positive pour une batterie secondaire au lithium-ion selon la revendication 9 ; une électrode négative ; une solution électrolytique ; et un séparateur.
